# EUROPEAN PATENT APPLICATION

(11) **EP 3 832 350 A1**
(43) Date of publication of application: **09.06.2021**
(21) Application number: 19213811.3
(22) Date of filing: 05.12.2019
(51) Int. Cl.: G01S 13/931, G01S 7/02, G01S 7/00

(54) **A VEHICLE RADAR SYSTEM WITH MONITORING FUNCTION**

(71) Applicant: Veoneer Sweden AB, 447 37 Vårgårda (SE)
(72) Inventor: Kritzner, Michael, 97464 Niederwerrn (DE); Goelz, Hansjerg, 85716 Unterschleissheim (DE); Moss, Jonathan, 85716 Unterschleissheim (DE); Fuchs, Martin, 85716 Unterschleissheim (DE); Lefevre, Andreas, 97464 Niederwerrn (DE)
(74) Representative: Westpatent AB

(57) **Abstract**

The present disclosure relates to a vehicle radar system (3) comprising a control unit (33) and a transceiver arrangement (10) that comprises a transmitter arrangement (20). The transmitter arrangement (20) comprises a transmitter oscillator (23) and a signal generator (24), and is arranged to generate and transmit a radar signal (4). The vehicle radar system (3) further comprises a first receiver arrangement (21a) that comprises a first receiver mixer (12b) and is arranged to receive reflected signals (5) where the transmitted radar signals (4) have been reflected by an object (6). The transceiver arrangement (10) comprises a second receiver arrangement (21b) that in turn comprises a second receiver mixer (12b), where the second receiver mixer (12b) is connected directly to an oscillator (23, 8) .

## Description

### DESCRIPTION OF THE DISCLOSURE

The present disclosure relates to a vehicle radar system comprising a transceiver arrangement that is arranged for generating radar signals and is arranged to transmit a radar signal and to receive reflected signals.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control is based.

A well-known type of radar transmission format is the frequency modulated continuous wave (FMCW) format. This type of radar waveform comprises a 'chirp' signal of linearly increasing or decreasing frequency. The chirp signals are transmitted, reflected and received by means of appropriate antennas comprised in the radar system. For a chirp signal, the frequency is continuously ramped between two values, the chirp signal thus being in the form of a continuous sinusoid where the frequency varies from a first low frequency to a second high frequency over the course of the ramp.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors (DSP:s) by means of Fast Fourier Transform (FFT) processing.

Monitoring of the radar frequency band independently of the radar signal used can be beneficial in view of possible data communication between different radar systems, for example so-called Radcom communication, where power consumption and duty cycle, as well as all signal processing, today are optimized for the radar application.

The object of the present disclosure is thus to provide a vehicle radar system which is arranged for independent monitoring of the radar frequency band.

This object is obtained by means of a vehicle radar system comprising a control unit and a transceiver arrangement that comprises a transmitter arrangement. The transmitter arrangement comprises a transmitter oscillator, a signal generator and a transmit antenna arrangement, where the transmitter arrangement is arranged to generate and transmit a radar signal. The vehicle radar system further comprises a first receiver arrangement (that comprises a first receiver mixer. The first receiver arrangement is arranged to receive reflected signals where the transmitted radar signals have been reflected by an object. The transceiver arrangement comprises a second receiver arrangement that in turn comprises a second receiver mixer, where the second receiver mixer is connected directly to an oscillator.

This means that a signal that is received by the second receiver is mixed with an oscillator signal such that a conventional down-mixing to an IF band or directly to a base band is accomplished. The second receiver is dedicated for monitoring a certain frequency band of interest, such as the radar frequency band used, is advantageous since previously a waveform independent monitoring of the radar frequency band has not been possible.

According to some aspects, the second receiver mixer is connected directly to a separate oscillator that is comprised in the second receiver arrangement.

In this way, a signal that is received by the second receiver arrangement is mixed with an oscillator signal that can be controlled independently of the rest of the vehicle radar system.

According to some aspects, the second receiver mixer is connected directly to the transmitter oscillator.

In this way, the transmitter oscillator can be re-used for the second receiver arrangement.

According to some aspects, the control unit is adapted to schedule a time gap in the transmitted radar signal where the transmitter arrangement is controlled to pause transmitting.

By scheduling the time gap to correspond to the occurrence of interfering signals, interference is mitigated.

According to some aspects, the control unit is adapted to time the radar signal in such a way that that an interfering signal occurs between radar signal occurrences.

This means that the radar signal and the interfering signal do not co-exist in time and frequency.

According to some aspects, the control unit is adapted to align the radar signal to different communicating radar systems and thus enabling data communication between these radar systems.

In this way, it is possible to track interfering radars and their timing and waveforms, monitor free sub bands of the radar band, and to find free timeslots by constant tracking or by using the channel for listen before talk without the costly processing and without demanding duty cycle.

According to some aspects, the radar system is adapted for transmitting and receiving frequency modulated continuous wave (FMCW) chirp signals, the radar signal being constituted by an FMCW chirp signal.

There are also disclosed herein methods and vehicles associated with the above-mentioned advantages.

### BRIEF DESCRIPTION OF THE DRAWINGS

The present disclosure will now be described more in detail with reference to the appended drawings, where:
- Figure 1: shows a schematic top view of a vehicle;
- Figure 2: shows a simplified schematic of a vehicle radar system;
- Figure 3: shows a first example of a chirp signal;
- Figure 4: shows a second example of a chirp signal;
- Figure 5: shows a third example of a chirp signal;
- Figure 6: shows a schematic top view of three vehicles; and
- Figure 7: shows a flowchart for methods according to the present disclosure.

### DETAILED DESCRIPTION

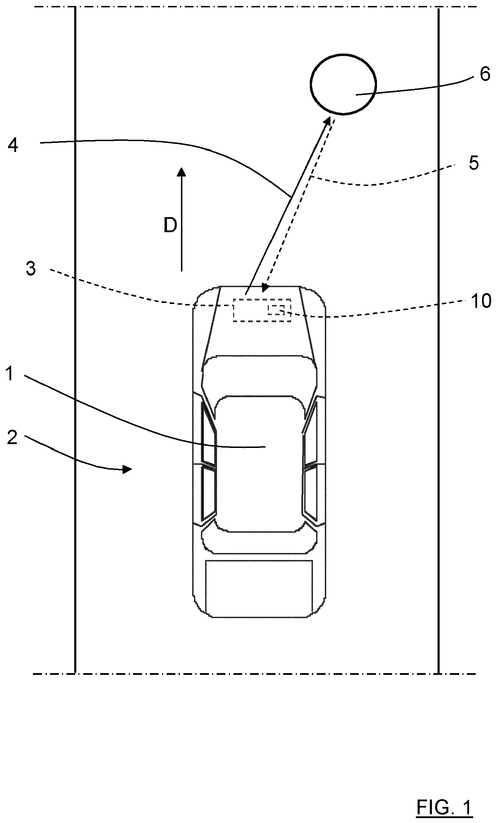

Figure 1 schematically shows a top view of a vehicle 1 arranged to run on a road 2 in a direction D, where the vehicle 1 comprises a vehicle radar system 3 which is arranged to distinguish and/or resolve single targets from the surroundings by transmitting signals 4 and receiving reflected signals 5 and using a Doppler effect in a previously well-known manner. The vehicle radar system 3 is arranged to provide azimuth angles of possible objects 6 by simultaneously sampling and analyzing phase and amplitude of the received signals 5.

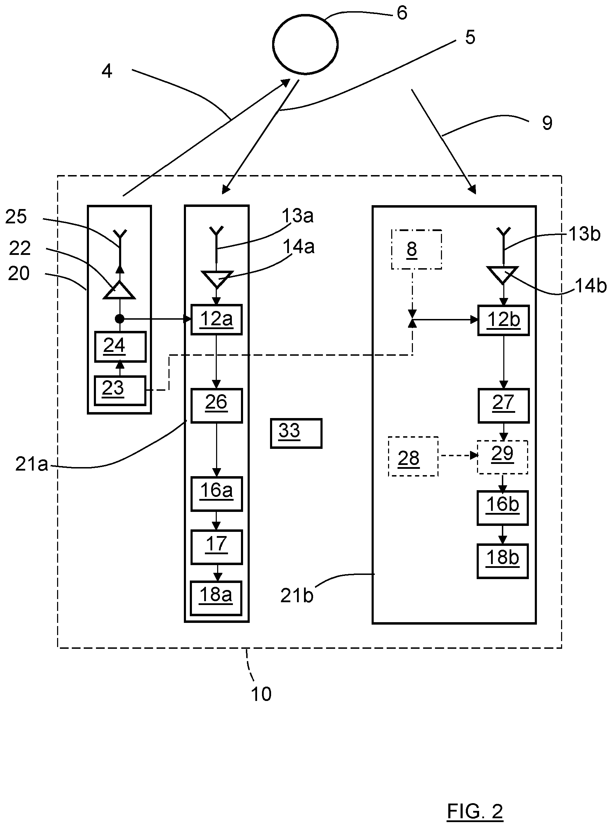

With reference also to Figure 2, the vehicle radar system 3 comprises a transceiver arrangement 10 arranged for generating sweep signals in the form of FMCW, Frequency Modulated Continuous Wave, chirp signals of a previously known kind. The transceiver arrangement 10 comprises a transmitter 20 and a first receiver 21a, where the transmitter 20 comprises a transmitter oscillator 23, a signal generator 24, a power amplifier arrangement 22 and a transmit antenna arrangement 25.

The first receiver 21a comprises a first receiver antenna arrangement 13a, a first low-noise amplifier 14a and a first receiver mixer 12a, where the received signals 5 are mixed with the chirp signal 4 in the first receiver mixer 12a, where the chirp signal 4 is fed to the first receiver mixer 12a from the signal generator 24. The first receiver 21a further comprises an IF (intermediate frequency) filter 26, a first ADC (Analogue to digital converter) arrangement 16a, a sampling and timing arrangements 17 and a first DSP arrangement 18a that is adapted for radar signal processing by means of Fourier transforms in a previous well-known manner such that the results from successive chirp signal ramps are combined into the Doppler domain.

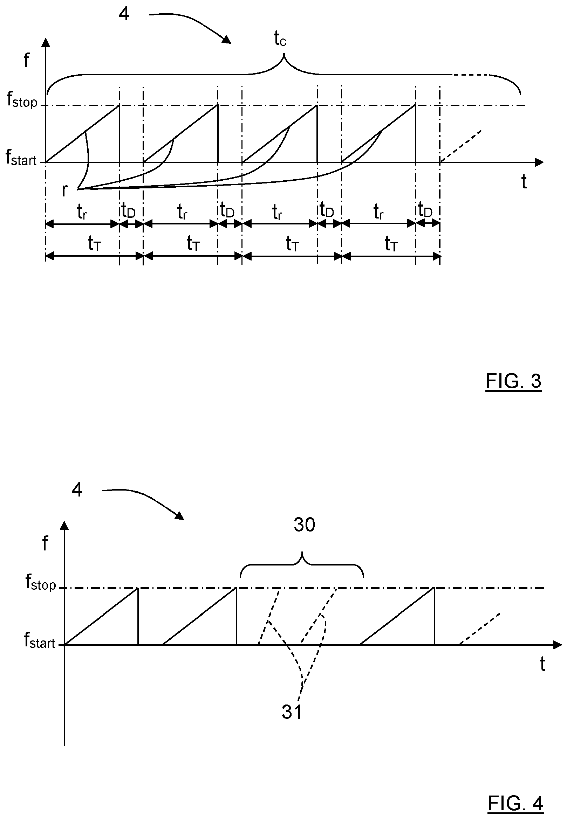

With reference also to Figure 3 that shows a first example of a chirp signal, the transmitter 20 is arranged to transmit a chirp signal 4, and the first receiver 21a is arranged to receive reflected signals 5, where the transmitted chirp signals 4 have been reflected by an object 6 as will be discussed more in detail below.

A chirp signal 4 is in the form of a continuous sinusoid where the frequency varies from a first frequency fₛₜₐᵣₜ to a second frequency fₛₜₒₚ over the course of a ramp, where the magnitude of the first frequency fₛₜₐᵣₜ falls below the magnitude of the second frequency fₛₜₒₚ. The chirp signal 4 comprises repeating cycles of a first plurality of frequency ramps r₁ where a cycle lasts for a certain cycle time t_{c} and each ramp lasts a certain ramp time tᵣ, having a ramp period time t_{T} being the respective time between the starting of two consecutive ramps. Between two consecutive ramps of the chirp signal 4 there is a delay time t_{D1}. The chirp signal 4 is formed in the signal generator 24 with input from the oscillator 23.

According to the present disclosure, the transceiver arrangement 10 comprises a second receiver 21b that in turn comprises a second receiver antenna arrangement 13b, a second low-noise amplifier 14b and a second receiver mixer 12b, where the second receiver mixer 12b is connected directly to the transmitter oscillator 23, as indicated with dashed lines in Figure 2. Alternatively, as indicated with dash-dotted lines, the second receiver mixer 12b is connected directly to a first separate oscillator 8. This means that a signal 9 that is received by the second receiver 21b is mixed with an oscillator signal such that a conventional down-mixing to an IF band or directly to a base band is accomplished.

The second receiver 21b further comprises an IF bandpass filter 27, a second ADC arrangement 16b and a second DSP arrangement 18b that is adapted for detecting the received digital signals. Optionally, in the case of further down-mixing to a base band being necessary, as indicated with dashed lines, the second receiver 21b further comprises a second separate oscillator 28 and a third receiver mixer 29, where the output down-mixed signal is fed into the second ADC arrangement 16b and then to the second DSP arrangement 18b.

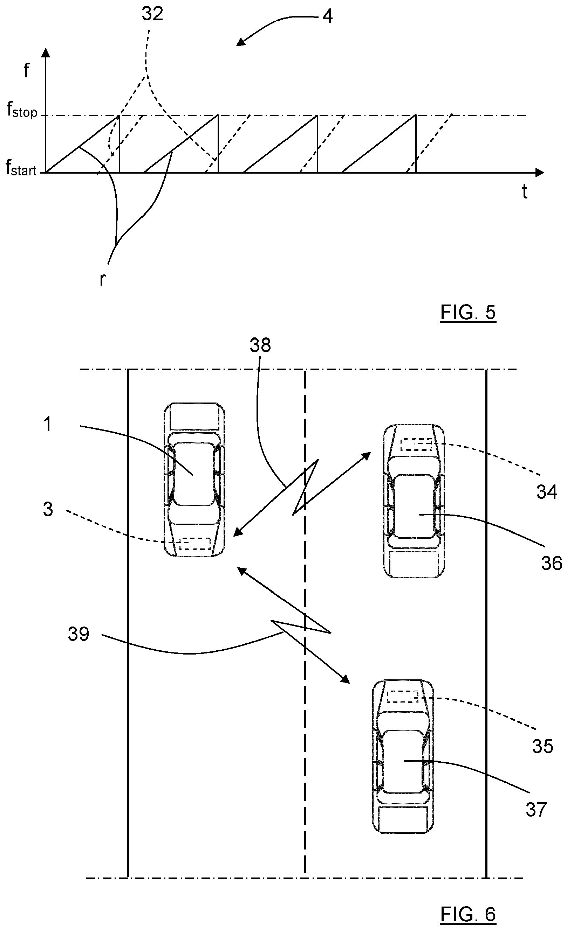

Having a second receiver 21b that is dedicated for monitoring a certain frequency band of interest, such as the radar frequency band used, is advantageous since previously a waveform independent monitoring of the radar frequency band has not been possible. Alignment to a communicating radar in the frequency domain, for example for use in Radcom, i.e. data communication signals 38, 39 between radar systems 3; 34, 35 in different vehicles 1; 36, 37 as shown in Figure 6, has previously been a challenge without having a separate channel for monitoring. Then, a transmission of FMCW chirp signals 4 had to take place when the communicating radar is pausing to avoid interference. While pausing the transmission, the receiver could listen to the communicating radar.

Besides that, for the second receiver 21b, power consumption, duty cycle, the ADC and the processing need not be optimized for radar only application. This means that components comprised in the second receiver 21b can be of relatively low cost and low performance compared to normal radar components.

By means of the present disclosure, Radcom data communication signals 38, 39 can be received by means of the second receiver 21b, separately and independently of the radar waveform used.

Furthermore, by monitoring the frequency band usage, in case of interference a control unit 33 comprised in the radar system 3 is adapted to change radar sub-band or center frequency of the chirp signal 4.

As shown in Figure 4 that shows a second example of a chirp signal, there is a scheduled time gap 30 in the chirp signal 4 where the transmitter 20 is controlled to pause transmitting. The control unit 33 is adapted to schedule the time gap 30 to correspond to the occurrence of interfering signals 31 to mitigate interference. This scheduling is enabled by means of the second receiver 21b that is adapted to monitoring the used frequency band.

As shown in Figure 5 that shows a third example of a chirp signal, the control unit 33 is adapted to time the chirp signal 4 in such a way that that an interfering signal 32 occurs between adjacent ramps r to mitigate interference. The interfering signal 32 thus occurs between radar signal occurrences such that the radar signal 4 and the interfering signal 32 do not co-exist in time and frequency. This timing is enabled by means of the second receiver 21b that is adapted to monitoring the used frequency band. The relative drift in time and frequency between the chirp signal 4 and the interfering signal 32 caused by hardware tolerances can be continuously monitored. Dependent on the monitoring result, the mitigation methods and parameters could be adapted.

The listen before talk method could be improved with the disclosure because the Radar RX and TX path could be configured in ready state and don't need to be reconfigured.

The listen before talk approach generally means that a transmitter is configured without being switched on. For example, a pre-ramp can be analyzed in a receiver that is listening, and if the frequency band is used by someone else, there is no transmission, instead the transmission has to wait or another frequency band has to be chosen. The transmitter configuration is reset in case of band change. After listening again, the transmission can be started if the frequency band is not used by someone else.

For an independent monitoring band, free slots in time and frequency are detected, continuously monitored, and the transmitter is configured accordingly before transmission.

By means of the present disclosure, an independent receiving channel is obtained. This channel can according to some aspects be used to align a radar signal to communicating radars in the frequency domain and thus enabling data communication between different radar systems 3; 34, 35, track interfering radars and their timing and waveforms, monitor free sub bands of the radar band, and to find free timeslots by constant tracking or by using the channel for listen before talk without the costly processing and without demanding duty cycle.

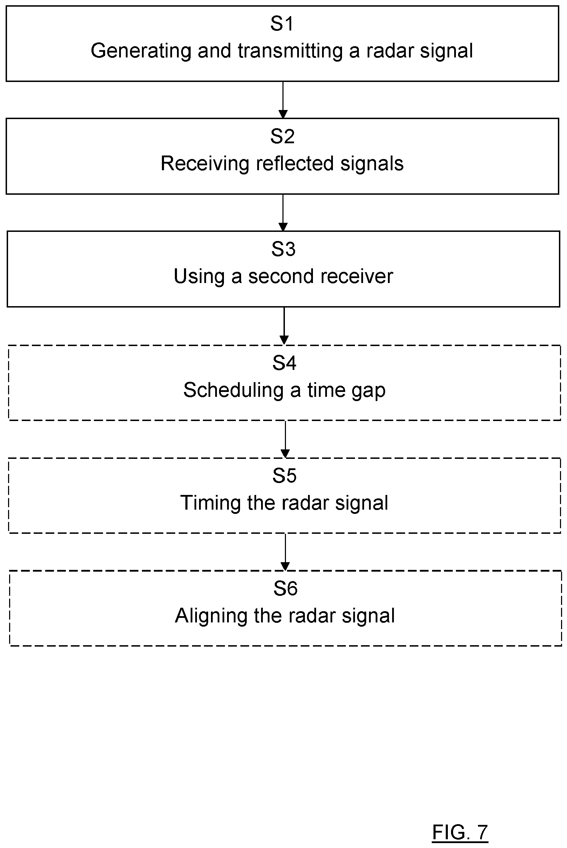

With reference to Figure 7, the present disclosure also relates to a method for a vehicle radar system 3, where the method comprises generating and transmitting S1 a radar signal 4 using a transmitter 20 with a transmitter oscillator 23, and receiving S2 reflected signals 5 using a first receiver 21a having a first receiver mixer, where the transmitted radar signals 4 have been reflected by an object 6. The method further comprises using S3 a second receiver 21b having a second receiver mixer 12b that is connected directly to an oscillator 23, 8.

According to some aspects, the second receiver mixer 12b is connected directly to a separate oscillator 8 in the second receiver 21b.

According to some aspects, the second receiver mixer 12b is connected directly to the transmitter oscillator 23.

According to some aspects, the method comprises scheduling S4 a time gap 30 in the transmitted radar signal 4 where the transmitter 20 is controlled to pause transmitting.

According to some aspects, method comprises timing S5 the radar signal 4 in such a way that that an interfering signal 32 occurs between radar signal occurrences.

According to some aspects, the method comprises aligning S6 the radar signal 4 to different communicating radar systems 3; 34, 35 and thus enabling data communication between these radar systems 3; 34, 35.

According to some aspects, the vehicle radar system 3 is used for transmitting and receiving frequency modulated continuous wave (FMCW) chirp signals, the radar signals 4 being constituted by an FMCW chirp signal 4.

The present disclosure is not limited to the examples above, but may vary freely within the scope of the appended claims. For example, any type of radar signals can be used, not only FMCW signals. Any type of communication between different radar systems 3; 34, 35 is possible, not being limited to the Radcom methods and systems previously known.

The radar system 3 may comprise several radar transceivers, where one or more of these can comprise the second receiver according to the present disclosure.

The radar system may be implemented in any type of vehicle such as cars, trucks and buses as well as boats and aircraft.

The schematics of vehicle radar systems are simplified, only showing parts that are considered relevant for an adequate description of the present disclosure. It is understood that the general design of radar systems of this kind is well-known in the art. For example, no devices that are arranged to use the acquired target information is shown, but many different such devices are of course conceivable; for example a warning and/or collision avoidance system. Other types of components, such as amplifiers and filters, can be applied at other positions in combination with, or instead of, the ones shown. For example, filters and/or amplifying stages may be added.

The number of antenna arrangements, antennas within each antenna arrangement and IF signals may vary.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

Each antenna arrangement 13a, 13b; 25 may for example comprise on or more antennas, and each antenna may be constituted by one antenna element or by an array of antenna elements.

According to some aspects, the first receiver antenna arrangement 13a and the second receiver antenna arrangement 13a can be constituted by one and the same common receiver antenna arrangement, where a power splitter and possibly a switch arrangement can be used for sharing the common receiver antenna arrangement between the first receiver 21a and the second receiver 21b.

Each receiver and transmitter is to be regarding as a corresponding receiver arrangement and transmitter arrangement, having a corresponding functionality. There is thus, generally, a transmitter arrangement 20, a first receiver arrangement 21a and a second receiver arrangement 21b.

According to some aspects, the transceiver 10 can comprise two or more monitoring receivers of the same kind as the second receiver 21b described.

The second ADC and DSP arrangement 18b is not necessary, and instead there can be any suitable detector device that is that is adapted for detecting the received digital signals.

Generally, the present disclosure relates to a vehicle radar system 3 comprising a control unit 33 and a transceiver arrangement 10 that comprises a transmitter arrangement 20. The transmitter arrangement 20 comprises a transmitter oscillator 23, a signal generator 24 and a transmit antenna arrangement 25, where the transmitter arrangement 20 is arranged to generate and transmit a radar signal 4. The vehicle radar system 3 further comprises a first receiver arrangement 21a that comprises a first receiver mixer 12b, where the first receiver arrangement 21a is arranged to receive reflected signals 5 where the transmitted radar signals 4 have been reflected by an object 6. The transceiver arrangement 10 comprises a second receiver arrangement 21b that in turn comprises a second receiver mixer 12b, where the second receiver mixer 12b is connected directly to an oscillator 23, 8.

According to some aspects, the second receiver mixer 12b is connected directly to a separate oscillator 8 that is comprised in the second receiver arrangement 21b.

According to some aspects, the second receiver mixer 12b is connected directly to the transmitter oscillator 23.

According to some aspects, the control unit 33 is adapted to schedule a time gap 30 in the transmitted radar signal 4 where the transmitter arrangement 20 is controlled to pause transmitting.

According to some aspects, the control unit 33 is adapted to time the radar signal 4 in such a way that that an interfering signal 32 occurs between radar signal occurrences.

According to some aspects, the control unit 33 is adapted to align the radar signal 4 to different communicating radar systems 3; 34, 35 and thus enabling data communication between these radar systems 3; 34, 35.

According to some aspects, the radar system 3 is adapted for transmitting and receiving frequency modulated continuous wave (FMCW) chirp signals, the radar signal 4 being constituted by an FMCW chirp signal 4.

The present disclosure also relates to a vehicle 1 comprising the vehicle radar system 3 according to the above.

## Claims

1. A vehicle radar system (3) comprising a control unit (33) and a transceiver arrangement (10) that comprises a transmitter arrangement (20), where the transmitter arrangement (20) comprises a transmitter oscillator (23), a signal generator (24) and a transmit antenna arrangement (25), where the transmitter arrangement (20) is arranged to generate and transmit a radar signal (4), the vehicle radar system (3) further comprising a first receiver arrangement (21a) that comprises a first receiver mixer (12b), where the first receiver arrangement (21a) is arranged to receive reflected signals (5) where the transmitted radar signals (4) have been reflected by an object (6), **characterized in that** the transceiver arrangement (10) comprises a second receiver arrangement (21b) that in turn comprises a second receiver mixer (12b), where the second receiver mixer (12b) is connected directly to an oscillator (23, 8) .

2. The vehicle radar system (3) according to claim 1, wherein the second receiver mixer (12b) is connected directly to a separate oscillator (8) that is comprised in the second receiver arrangement (21b).

3. The vehicle radar system (3) according to claim 1, wherein the second receiver mixer (12b) is connected directly to the transmitter oscillator (23).

4. The vehicle radar system (3) according to any one of the previous claims, wherein the control unit (33) is adapted to schedule a time gap (30) in the transmitted radar signal (4) where the transmitter arrangement (20) is controlled to pause transmitting.

5. The vehicle radar system (3) according to any one of the previous claims, wherein the control unit (33) is adapted to time the radar signal (4) in such a way that that an interfering signal (32) occurs between radar signal occurrences.

6. The vehicle radar system (3) according to any one of the previous claims, wherein the control unit (33) is adapted to align the radar signal (4) to different communicating radar systems (3; 34, 35) and thus enabling data communication between these radar systems (3; 34, 35).

7. The vehicle radar system (3) according to any one of the previous claims, wherein the radar system (3) is adapted for transmitting and receiving frequency modulated continuous wave, FMCW, chirp signals, the radar signal (4) being constituted by an FMCW chirp signal (4).

8. A vehicle (1) comprising the vehicle radar system (3) according to any one of the claims 1-7.

9. A method for a vehicle radar system (3), where the method comprises:
generating and transmitting (S1) a radar signal (4) using a transmitter arrangement (20) with a transmitter oscillator (23); and
receiving (S2) reflected signals (5) using a first receiver arrangement (21a) having a first receiver mixer, where the transmitted radar signals (4) have been reflected by an object (6), wherein the method further comprises
using (S3) a second receiver arrangement (21b) having a second receiver mixer (12b) that is connected directly to an oscillator (23, 8).

10. The method according to claim 9, wherein the second receiver mixer (12b) is connected directly to a separate oscillator (8) in the second receiver arrangement (21b).

11. The method according to claim 9, wherein the second receiver mixer (12b) is connected directly to the transmitter oscillator (23).

12. The method according to any one of the claims 9-11, wherein the method comprises scheduling (S4) a time gap (30) in the transmitted radar signal (4) where the transmitter arrangement (20) is controlled to pause transmitting.

13. The method according to any one of the claims 9-12, wherein the method comprises timing (S5) the radar signal (4) in such a way that that an interfering signal (32) occurs between radar signal occurrences.

14. The method according to any one of the claims 9-13, wherein the method comprises aligning (S6) the radar signal (4) to different communicating radar systems (3; 34, 35) and thus enabling data communication between these radar systems (3; 34, 35) .

15. The method according to any one of the claims 9-14, wherein the vehicle radar system (3) is used for transmitting and receiving frequency modulated continuous wave, FMCW, chirp signals, the radar signals (4) being constituted by an FMCW chirp signal (4).
